# EUROPÄISCHE PATENTSCHRIFT

(11) **EP 2 781 337 B1**
(45) Veröffentlichungstag und Bekanntmachung des Hinweises auf die Patenterteilung: **11.07.2018**
(21) Anmeldenummer: 13159816.1
(22) Anmeldetag: 18.03.2013
(51) Int. Cl.: B29C 59/04, B32B 38/06, B30B 5/04

(54) **Pressplattenanordnung und Verfahren zur Herstellung eines Dekorpaneels**
Press plate assembly and method for the preparation of a decorative panel
Ensemble de plaques de pression et procédé de fabrication d'un panneau décoratif

(43) Veröffentlichungstag der Anmeldung: 24.09.2014
(73) Patentinhaber: Surface Technologies GmbH & Co. KG, 15837 Baruth (DE)
(72) Erfinder: Hannig, Hans-Jürgen, 51427 Bergisch Gladbach (DE); Buhlmann, Carsten, 15834 Rangsdorf (DE)
(74) Vertreter: Michalski Hüttermann & Partner Patentanwälte mbB

(56) Entgegenhaltungen:
- WO-A1-2010/066228
- US-A- 5 149 394
- US-A- 5 596 912
- US-A1- 2009 087 506

## Beschreibung

Die vorliegende Erfindung betrifft eine Pressplattenanordnung mit einer Mehrzahl von oberflächenstrukturierten Pressplatten zur Einbringung von Oberflächenstrukturen in ein Pressgut, wobei die Pressplattenanordnung eine geschlossene Bandstruktur ausbildet. Darüber hinaus betrifft die vorliegende Erfindung ein Verfahren zur Herstellung eines Dekorpaneels mit einer im Wesentlichen mit dem Dekor übereinstimmenden Oberflächenstruktur.

Bei der Herstellung von Schichtwerkstoffen, wie beispielsweise Laminaten oder Dekorpaneelen, wird in der Regel ein Schichtenstapel unter Einwirkung von Druck und/oder Wärme zu einem Werkstück verpresst. Ein solches Verpressen kann dabei im industriellen Einsatz semikontinuierlich oder kontinuierlich erfolgen. Beim semikontinuierlichen Verpressen kommen sogenannte Kurztaktpressen zum Einsatz, bei welchen das Pressgut, also der zu verpressende Schichtenstapel, zwischen einem Presstisch und einem Pressstempel zu liegen kommt und durch Krafteinwirkung des Pressstempels verpresst wird. Der Pressstempel weißt an seiner dem Pressgut zugewendeten Seite eine Pressplatte auf. Die Oberfläche der Pressplatte ist dabei in Abhängigkeit der auf dem Pressgut zu erzeugenden Struktur ausgebildet. Soll beispielsweise eine glatte ggf. hoch glänzende Oberfläche auf dem Pressgut erzeugt werden, werden spiegelpolierte eingesetzt. Sollen bestimmte 3-dimensionale Strukturen in die Oberfläche des Pressgutes eingebracht werden, weisen die eingesetzten Pressplatten eine entsprechende, invertierte Struktur auf. Sowohl die spiegelglänzende Oberfläche als auch die 3-dimensional strukturierte Oberfläche wird dabei in der Regel mittel galvanochemischer Verfahren und ggf. mechanischer Nachbearbeitung erzeugt.

US 5 596 912 A offenbart eine Pressplattenanordnung gemäß dem Oberbegriff des Anspruchs 1 und ein Verfahren zum semikontinuierlichen Verpressen von Schichtwerkstoffen. Beim kontinuierlichen Verpressen kommen vielfach sogenannte Doppelbandpressen zum Einsatz, bei welchen das Pressgut zwischen zwei richtungsgleich bewegten Pressbändern eingespannt und durch Verringerung des Pressspaltes zwischen den Bändern in Förderrichtung verpresst wird. Auch dabei kann es vorgesehen sein, dass die zum Pressgut ausgerichtete Oberfläche des Pressbandes insbesondere galvanochemisch behandelt ist, um auf ihr die gewünschte, auf das Pressgut zu übertragende Oberflächenstruktur zu erzeugen. Bei industrieller Anwendung haben solche Pressbänder heutzutage Längen von über 100m was insbesondere die galvanische Bearbeitung solcher Pressbänder, beispielsweise deren Hartverchrom zu Verbesserung der Standzeit der Bänder, zu einer schwierigen Aufgabe macht. Die führt dazu, dass Pressbänder im Vergleich zu Pressplatten deutlich teurer sind. Auf der anderen Seite haben Doppelbandpressen einen im Vergleich zu Kurztaktpressen deutlich höheren Pressgutdurchsatz, da bei ihnen die Totzeiten für die Zu- und Ausführung des Pressgutes aus der Presse entfallen. Ein weiterer Nachteil der Doppelbandpressen gegenüber Kurztaktpressen ist die Ausrichtproblematik des Pressgutes relativ zum Pressband. Während es bei unstrukturierten Oberflächen in der Regel nicht eine exakte Ausrichtung des Pressgutes zum Pressband notwendig ist, da die Pressoberfläche des Pressbandes an jeder Stelle identisch ist, ist eine hochexakte Ausrichtung des Pressgutes zur Struktur im Pressband immer dann notwendig, wenn diese Struktur mit einem Dekorbild des zu Pressgutes übereinstimmen soll. Dies ist beispielsweise bei Dekorpaneelen der Fall, bei welchen in die Oberfläche des Paneels eine beispielsweise eine Holzmaserung nachbildende habtische Struktur eingebracht werden soll.

US 5 149 394 A offenbart eine Doppelbandpresse und ein Verfahren zum kontinuierlichen Verpressen von Schichtwerkstoffen. Insbesondere bei den zuvor beschriebenen Paneelen ist es im Markt gewünscht, dass das angebotene Dekor eine geringe Wiederholungsrate zeigt, so dass es möglich ist, auch größere Flächen ohne Dekorwiederholung bedecken zu können. Während dies hinsichtlich des Dekors beispielsweise durch den Einsatz von Direktdruckverfahren, wie beispielsweise Digitaldruck, ist das vorsehen entsprechender dekorsynchroner Oberflächenstrukturen bei einer solchen Dekorvarianz sehr kostenintensiv und technisch schwierig, da Pressbleche entweder eine Mehrzahl von Pressen vorgesehen werden muss, oder die Pressen entsprechend dem jeweiligen Dekor umgerüstet werden müssen, was sehr zeitaufwendig ist.

Es ist daher die Aufgabe der vorliegenden Erfindung eine Pressplattenanordnung zur Verfügung zu stellen, welche bei einfacher Herstellung einen hohen Pressgutdurchsatz mit präzisier Ausrichtung des Pressgutes zur Oberflächenstruktur der Pressplatte ermöglicht. Darüber hinaus ist es die Aufgabe der vorliegenden Erfindung ein durchsatzstarkes Verfahren zur Herstellung eines Dekorpaneels anzugeben, bei welchem die Oberflächenstruktur im Wesentlichen synchron zum Dekor ausgerichtet ist.

Gelöst wird diese Aufgabe hinsichtlich der Vorrichtung durch eine Pressplattenanordnung gemäß Anspruch 1, hinsichtlich des Verfahrens durch ein Verfahren gemäß Anspruch 10. Es wird somit eine Pressplattenanordnung vorgeschlagen, aufweisend eine Mehrzahl von Pressplatten P₁ bis Pn mit n ≥4, vorzugsweise n ≥5, besonderes bevorzugt n ≥6, wobei die Pressplatten eine Strukturierung zur Einbringung von Oberflächenstrukturen in ein Pressgut aufweisen, welches dadurch gekennzeichnet ist, dass die Pressplatte P₁ bis Pₙ über ihre Stirnseiten miteinander verbunden sind, wobei die erste Pressplatte P₁ und die letzte Pressplatte Pₙ über ihre Stirnseiten derart miteinander verbunden sind, dass die Pressplattenanordnung insgesamt eine geschlossene Bandstruktur ausbildet.

Mit der erfindungsgemäßen Pressplattenanordnung wird es ermöglicht, Pressbänder in Segmenten einzelner Pressplatten herzustellen, welche erst nach ihrer Strukturierung und ggf. einer Oberflächenveredelung, wie beispielsweise einer Verchromung, zu einer Bandstruktur zusammengefügt werden. Dies erlaubt es, Pressbänder deutlich kostengünstiger bereitzustellen, da die anlagentechnischen Voraussetzungen für die Herstellung einzelner Pressplatten deutlich weniger aufwendig sind, als die Voraussetzungen zu Herstellung und Bearbeitung von geschlossenen Pressbändern.

Gemäß einer bevorzugten Ausführungsform wird eine Pressplattenanordnung vorgeschlagen, aufweisend eine Mehrzahl von Pressplatten P₁ bis Pn mit n ≥4, vorzugsweise n ≥5, besonderes bevorzugt n ≥6, wobei die Pressplatten eine Strukturierung zur Einbringung von Oberflächenstrukturen in ein Pressgut aufweisen, welches dadurch gekennzeichnet ist, dass die Pressplatte P₁ bis Pₙ voneinander verschiedene Strukturierungen S₁ bis Sₙ aufweisen und über ihre Stirnseiten miteinander verbunden sind, wobei die erste Pressplatte P₁ und die letzte Pressplatte Pₙ über ihre Stirnseiten derart miteinander verbunden sind, dass die Pressplattenanordnung insgesamt eine geschlossene Bandstruktur ausbildet.

Die erfindungsgemäße Plattenanordnung ermöglicht es, Pressplatten in der aus dem Stand der Technik bekannten Weise herzustellen und diese dann zu einem Pressband gewünschter Länge zusammenzufügen. Dabei ermöglicht es die erfindungsgemäße Pressplattenanordnung, Pressplatten unterschiedlicher Strukturierung zu einem in einer Doppelbandpresse einsetzbaren Pressband zusammenzufügen, so dass beispielsweise in Kombination mit einer entsprechenden Dekorvarianz ermöglicht wird, oberflächenstrukturierte Dekorlaminate mit einer deutlich geringeren Dekorwiederholung herzustellen. Dies erlaubt beispielsweise bei der Herstellung von Laminat-Bodenbelägen mit dekorsynchroner Oberflächenstruktur Paneele zum dekorwiederholungsfreien Verlegen deutlich größere Flächen, wie beispielsweise ≥25m² zur Verfügung zu stellen, ohne das es dazu einer herstellerseitigen Erweiterung des Maschinenparks bedarf.

Gemäß einer Ausgestaltung der Erfindung sind die Pressplatten an ihren Stirnseiten stoffschlüssig miteinander verbunden. Dazu kann es insbesondere vorgesehen sein, dass die Platten miteinander verschweißt oder verklebt sind.

Gemäß einer bevorzugten Ausführungsform der Erfindung ist an den Stirnseiten der Pressplatten ein Verbindungsbereich ausgebildet, welcher in Richtung der Längsausdehnung der Pressplatten jeweils eine Ausdehnung zwischen ≥ 1mm und ≤ 2,5cm, bevorzugt zwischen ≥ 2mm und ≤ 7,5mm, so dass sich eine Gesamtausdehnung des Verbindungsbereiches zwischen zwei miteinander verbundenen Pressplatten zwischen ≥ 2mm und ≤ 5cm, bevorzugt zwischen ≥ 5mm und ≤ 1,5cm ergibt. Dabei ist es insbesondere bevorzugt, wenn der Verbindungsbereich keine über ein Schleifen und/oder Polieren des Verbindungsbereiches hinausgehende Oberflächenbearbeitung aufweist.

Gemäß einer weiteren Ausgestaltung der Erfindung sind die Verbindungsbereich zwischen zwei Pressblechen Druckdicht ausgeführt, so dass ein auf einer Flächenseite einer Pressplatte anliegender Öl- oder Gasdruck nicht über die Verbindungsbereiche entweichen kann.

Alternativ kann es vorgesehen sein, dass die Pressplatten an ihren Stirnseiten lösbar miteinander verbunden sind. Zur lösbaren Verbindung der Platten miteinander können diese beispielsweise synchron zueinander angeordnete Ausnehmungen aufweisen, über welche sich die Pressplatten durch einführen eines Verbindungselementes, wie beispielsweise einer Niete, einer Schraube, verbinden lassen.

Gemäß einer weiteren Ausgestaltung der Erfindung kann es vorgesehen sein, dass die Pressplatten an ihren Stirnseiten zueinander versetzte, formschlüssig ineinandergreifende Formelemente aufweisen. Hierdurch wird die Kantenlänge entlang welcher die Pressplatten miteinander verbunden werden deutlich Erhöht, so dass die Im Pressbetrieb auftretende Zugbelastung der Verbindung zwischen den Pressplatten auf eine größere Fläche verteilt und somit pro Flächeneinheit verringert werden kann.

Gemäß einer weiter bevorzugten Ausgestaltung der Erfindung kann es vorgesehen sein, dass die formschlüssig ineinandergreifenden Formelemente Hinterschneidungen aufweisen. Dabei führen solche Hinterschneidungen zum einen zu einer weiteren Vergrößerung der Kontaktfläche zwischen den miteinander zu verbindenden Stirnseiten der Pressplatten, zum anderen können durch die Hinterschneidungen verbessert im Pressbetrieb auftretende Zugkräfte in das Pressplattenmaterial eingeleitet werden, was zu einer weiteren Verringerung der Belastung der Plattenverbindungen, wie beispielsweise Schweißnähte oder Verklebungen, führt.

Gemäß einer weiteren Ausgestaltung der Erfindung kann es dabei insbesondere vorgesehen sein, dass die Pressplatten miteinander ohne weitere Verbindungsmittel verbunden sind. Dazu kann es vorgesehen sein, dass die ineinandergreifenden Formelemente als Hakenelemente ausgeführt sind, mittels welcher sich die Pressplatten ineinander verhaken lassen. Dabei kann es insbesondere vorgesehen sein, dass die Hakenelemente abwechselnd in entgegengesetzter Richtung aus der Ebene der Pressplatte herausragen.

Gemäß einer weiteren Ausgestaltung der Erfindung kann es vorgesehen sein, dass die Pressplatten Positionsmarkierungen aufweisen, mittels welcher die Position einer Pressplatte relativ zu einem Pressgut ermittelbar ist. Solche Positionsmarkierungen können bevorzugt aus optischen, magnetischen und/oder elektronischen Markierungsmittel gebildet sein. Beispiele für optische Markierungen sind solche, welche durch optische Mittel, wie beispielsweise Kameras oder Lichtschranken, ausgelesen werden können. Dabei ist eine einfache Form eines optischen Markierungsmittels eine Ausnehmung in der Pressplatte, durch welche ein Lichtstrahl einer Lichtschranke durchscheinen kann und so eine bestimmte Position der Pressplatte durch auslösen der Lichtschranke erkannt werden kann. Alternativ können auf der Pressplatte kameraauslesbare optische Muster angeordnet sein, welche unter Anwendung geeigneter Mustererkennungsalgorithmen einen Rückschluss auf die Position der Pressplatte erlauben. Beispielse für magnetische Markierungsmittel sind beispielsweise Magnetelemente, welche bei Erreichen einer bestimmten Position der Pressplatte innerhalb der Presse einen Magnetkontakt auslösen und so einen exakten Rückschluss auf die Plattenposition zulassen.

Ein elektronisches Markierungsmittel kann beispielsweise ein RFID-Element (radiofrequency identification) sein, welches über ein geeignetes Auslesesystem an einer bestimmten Stelle der Presse ausgelesen wird und so einen Rückschluss auf die Position der jeweiligen Pressplatte innerhalb der Presse erlaubt. Dabei kann es insbesondere vorgesehen sein, dass eine Mehrzahl von Markierungsmitteln, auch unterschiedlicher Art, vorgesehen ist, um die Präzision bei der Bestimmung der Plattenposition innerhalb der Presse zu erhöhen. Ausgehend von der exakten Position der Pressplatte innerhalb der Pressplatte kann dann eine Ausrichtung des Pressgutes relativ zu Pressplatte erfolgen, um eine dekorsynchrone Einbringung einer Oberflächenstruktur in das Pressgut sicherzustellen. Insbesondere sind die Markierungsmittel geeignet, eine Ausrichtung des Pressgutes zur Pressplatte in der Art zu ermöglichen, dass der zwischen zwei Pressplatten ausgebildete Verbindungsbereich mit einer Lücke zwischen zwei Pressguten, übereinfällt.

Die einzelnen Pressplatten in der erfindungsgemäßen Pressplattenanordnung können beispielsweise eine Stärke im Bereich zwischen ≥1,0mm und ≤4,0mm, vorzugsweise zwischen ≥1,5mm und ≤2,5mm aufweisen. Die Länge der einzelnen Pressplatten kann beispielsweise in einem Bereich zwischen ≥2,0m und ≤6,0m, vorzugsweise zwischen ≥2,5m und ≤5,0m liegen und die Breite der einzelnen Pressplatten kann in einem Bereich zwischen ≥0,8m und ≤4,0m, vorzugsweise zwischen ≥1,5m und ≤3,0m liegen.

Hinsichtlich des Verfahrens wird mit der Erfindung ein Verfahren zur Herstellung eines Dekorpaneels mit einer im Wesentlichen mit dem Dekor übereinstimmenden Oberflächenstruktur vorgeschlagen, aufweisend die Verfahrensschritte:
- Bereitstellen einer ersten Trägerplatte T₁ und Aufbringen einer ein erstes Dekors D₁ aufweisenden Dekorschicht auf die erste Trägerplatte T₁;
- Bereitstellen weiterer Trägerplatten Tₙ und Aufbringen weiterer Dekore Dₙ aufweisender Dekorschichten, welche von den Dekoren D₁ und Dₙ₋₁ verschieden sind;
- Unmittelbar aufeinanderfolgendes Zuführen der mit den Dekoren D₁ bis Dₙ versehenden Trägerplatten T₁ bis Tₙ als Pressgut Gₙ zu einer Presse mit einer Pressplattenanordnung gemäß einem der Ansprüche 1 bis 7, wobei die Trägerplatten derart zugeführt werden, dass jeder Trägerplatte Tₙ ein zugehöriges Pressplatte Pₙ zugeordnet wird;
- Auslesen der Positionsmarkierung der jeweiligen Pressplatte Pₙ und Ausrichten des Pressgutes Gₙ derart, dass das Dekor Dₙ synchron zur Strukturierung Sₙ der Pressplatte Pₙ ausgerichtet ist; und
- Verpressen des Pressgutes Gₙ mittels der Pressplatte Pₙ unter Einbringung einer mit dem Dekor Dₙ synchronisierten Struktur Sₙ in das Pressgut Gₙ.

Das erfindungsgemäße Verfahren erlaubt somit die einfache und kostengünstige Herstellung von Dekorpaneelen mit einer hohen Varianz des Dekors sowie der Oberflächenstruktur ohne das es dazu eines jeweiligen Umrüstens einer Presse bedarf.

Gemäß einer bevorzugten Ausgestaltung des Verfahrens wird als Presse eine isobare Presse eingesetzt, welche bevorzugt in einem Druckbereich zwischen >1,5MPa und ≤8MPa, besonders bevorzugt zwischen ≥2,5MPa und ≤6MPa arbeitet.

Gemäß einer Ausgestaltung des Verfahrens ist es vorgesehen, dass vor der Zuführung des Pressgutes Gₙ eine Deck- und/oder Verschleißschutzschicht auf die Dekorschicht aufgebracht wird. In eine solche Deck und/oder Verschleißschutzschicht kann dann mittels der strukturierten Pressplatte als Matrize eine Oberflächenstruktur eingebracht werden.

Dabei kann es vorgesehen sein, dass die Deck- und/oder Verschleißschutzschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann es vorgesehen sein, dass der Hartstoff in einer Menge zwischen 5 Gew.-% und 40 Gew.-%, vorzugsweise zwischen 15 Gew.-% und 25 Gew.-% in der Deck- und/oder Verschleißschutzschichtzusammensetzung enthalten ist. Vorzugsweise weist der Hartstoff dabei einen mittleren Korndurchmesser zwischen 10 µm und 250 µm, weiter vorzugsweise zwischen 10µm und 100µm auf. Hierdurch wird vorteilhafter Weise erreicht, dass die Deck- und/oder Verschleißschichtzusammensetzung eine stabile Dispersion ausbildet und eine Entmischung bzw. ein Absetzten des Hartstoffes in der Deck- und/oder Verschleißschutzschichtzusammensetzung vermieden werden kann. Zur Ausbildung einer entsprechenden Deck- und/oder Verschleißschutzschicht kann es vorgesehen sein, dass die Hartstoff enthaltende und strahlungshärtbare Zusammensetzung in einer Konzentration zwischen 10 g/m² und 250 g/m², vorzugsweise zwischen 25 g/m² und 100g/m² aufgetragen wird. Dabei kann die Auftragung beispielsweise mittels Walzen, wie Gummiwalzen oder mittels Gießvorrichtungen aufgetragen werden. In einer weiteren Ausgestaltung der Erfindung kann es vorgesehen sein, dass der Hartstoff zum Zeitpunkt des Auftrages der Deck- und/oder Verschleißschutzschichtzusammensetzung nicht in der Zusammensetzung enthalten ist, sondern als Partikel auf die aufgetragenen Verschleißschichtzusammensetzung aufgestreut wird und diese im Anschluss gehärtet wird, beispielsweise durch Verpressen unter Verwendung einer erfindungsgemäßen Pressplattenanordnung. Gemäß einer weiteren Ausgestaltung der kann die Deck- und/oder Verschleißschicht dabei Mittel zur Verringerung der statischen (elektrostatischen) Aufladung des letztendlichen Laminates aufweisen. Beispielsweise kann es dazu vorgesehen sein, dass die Deck- und/oder Verschleißschicht Verbindungen wie z.B. Cholinchlorid aufweist. Das Antistatikmittel kann dabei beispielsweise in einer Konzentration zwischen ≥0,1 Gew.-% und ≤40,0 Gew.-%, bevorzugt zwischen ≥1,0 Gew.-% und ≤30,0 Gew.-% in der Deck- und/oder Zusammensetzung zur Ausbildung Verschleißschicht enthalten sein.

Gemäß einer weiteren Ausgestaltung der Erfindung kann es vorgesehen sein, dass die Dekorschicht mittels eines Direktdruckverfahrens aufgebracht wird. Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht verstanden. Entgegen der konventionellen Verfahren, bei welchen auf einen Träger eine zuvor mit einem gewünschten Dekor bedruckte Dekorschicht aufgebracht wird, erfolgt beim Direktdruck das Aufdrucken des Dekors unmittelbar im Zuge der Paneel-Herstellung. Dabei können unterschiedliche Drucktechniken, wie beispielsweise Flexo-Druck, Offset-Druck oder Siebdruck zum Einsatz gelangen. Insbesondere können dabei Digitaldrucktechniken, wie beispielsweise Inkjet-Verfahren oder Laserdruck-Verfahren eingesetzt werden. Im Sinne der Erfindung sind unter dem Begriff Faserwerkstoffe Materialien wie z.B. Papier und Vliese auf Basis pflanzlicher, tierische, mineralischer oder auch künstlicher Fasern zu verstehen, ebenso wie Pappen. Beispiele sind Faserwerkstoffe aus pflanzlichen Fasern sind neben Papieren und Vliesen aus Zellstofffasern, Platten aus Biomasse wie Stroh, Maisstroh, Bambus, Laub, Algenextrakte, Hanf, Baumwolle oder Ölpalmenfasern. Beispiele für tierische Faserwerkstoffe sind keratinbasierte Materialien wie z.B. Wolle oder Rosshaar. Beispiele für mineralische Faserwerkstoffe sind aus Mineralwolle oder Glaswolle.

Gemäß einer weiteren Ausgestaltung der Erfindung kann es vorgesehen sein, dass jeweils vor der Aufbringung der Dekorschicht auf die Trägerplatte ein Druckuntergrund aufgebracht wird. Dazu kann es vorgesehen sein, dass auf einen plattenförmigen Träger des herzustellenden Laminates eine Harzschicht aufgebracht wird, mittels welcher eine unbedruckte Papier- oder Vliesschicht aufgebracht wird und der so entstandene Schichtaufbau dann bei einer Temperatur zwischen ≥ 40° und ≤ 250°C kalandriert wird. Nach dem Kalandrieren wird eine Harzzusammensetzung aufgebracht, welche zwischen ≥5 Gew.-% und ≤ 50 Gew.-%, vorzugsweise zwischen ≥10 Gew.-% und ≤ 70 Gew.-% eines Feststoffes mit einem mittleren Korndurchmesser d₅₀ zwischen ≥0,01µm und ≤1µm aufweist. Dabei kann der wenigstens eine Verbindung der Gruppe bestehend aus Titandioxid, Bariumsulfat, Bariumoxid, Bariumchromat, Zirconium(IV)oxid, Siliciumdioxid, Aluminiumhydroxid, Aluminiumoxid, Eisenoxid, Eisen(III)hexacyanoferrat, Chromoxid, Cadmiumoxid, Cadmiumsulfid, Cadmiumselenit, Cobaldoxid, Cobaldphosphat, Cobaldaluminat, Vanadiumoxid, Bismutvanadiumoxid, Zinnoxid, Kupferoxid, Kupfersulfat, Kupfercarbonat, Bleiantimonat, Bleichromat, Bleioxid, Bleicarbonat, Calciumcarbonat, Calciumsulfat, Calciumaluminiatsulfat, Zinkoxid, Zinksulfid, Arsensulfid, Quecksilbersulfid, Ruß, Graphit, oder Mischungen dieser aufweist. Durch die Verwendung solcher Feststoffe kann insbesondere ein farbiger Druckuntergrund bereitgestellt werden, dessen Farbgebung eine den Dekordruck unterstützende Eigenschaft aufweist. So kann beispielsweise bei einer Dekorgestaltung, welche eine dunkle Holzart repräsentieren soll ein Druckuntergrund mit einem braunen oder bräunlichen Grundton aufgebracht werden, während bei einer Dekorgestaltung, welche eine helle Holzart oder einen hellen Stein repräsentieren soll ein Druckuntergrund mit einem gelben oder weißen Grundton aufgebracht werden.

Insbesondere kann es dabei erfindungsgemäß vorgesehen sein, dass nach dem Kalandrieren eine Harzzusammensetzung aufgebracht wird, welche wenigstens ein organisches oder anorganisches Pigment ausgewählt aus der Gruppe bestehend aus Berlinerblau, Brillantgelb, Cadmiumgelb, Cadmiumrot, Chromoxidgrün, Cobaltblau, Cobaltcölinblau, Cobaltviolett, Irgazinrot, Eisenoxidschwarz, Manganviolett, Phthalocyaninblau, Terra di Siena, Titanweiß, Ultramarinblau, Ultramarinrot, Umbra, Kaolin, Zirkonium-Silicat-Pigmente, Monoazogelb und Monoazoorange, Thioindigo, beta-Naphthol-Pigmente, Naphthol AS-Pigmente, Pyrazolon-Pigmente, N-Acetessigsäureanilid-Pigmente, Azometallkomplex-Pigmente, Diaryl-Gelb-Pigmente, Chinacridon-Pigmente, Diketopyrrolo-pyrrol-Pigmente (DPP), Dioxazin-Pigmente, Perylen-Pigmente, Isoindolinon-Pigmente, Kupfer-Phthalocyanin-Pigmente und Mischungen dieser aufweist.

Gemäß einer weiteren Ausgestaltung des Verfahrens kann es vorgesehen sein, dass nach dem Kalandrieren eine Harzzusammensetzung aufgebracht wird, welche als Harzkomponente wenigstens eine Verbindung ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser aufweist. Es hat sich überraschender Weise gezeigt, dass bei der Verwendung einer entsprechenden Harzkomponente in Kombination mit dem Feststoffanteil in der Harzzusammensetzung ein Druckuntergrund bereitgestellt werden kann, welcher eine deutlich verbesserte Haftung einer abschließend aufgebrachten Deck- und/oder Verschleißschicht ermöglicht, was zu einer verbesserten Stabilität des Laminates führt. Die Harzzusammensetzung kann dabei beispielsweise einen Harzanteil zwischen ≥50 Gew.-% und ≤ 95 Gew.-%, vorzugsweise zwischen ≥55 Gew.-% und ≤ 80 Gew.-% aufweisen.

Desweiteren kann es vorgesehen sein, dass nach dem Kalandrieren eine Harzzusammensetzung aufgebracht wird, welche einen Härter aufweist, wobei der Härter in der Harzzusammensetzung beispielsweise in einer Konzentration zwischen ≥0,05 Gew.-% und ≤3,0 Gew.-%, vorzugsweise ≥0,15 Gew.-% und ≤2,0 Gew.-%, noch bevorzugter zwischen ≥0,5 Gew.-% und ≤2,0 Gew.-% enthalten ist. Das Vorsehen eines Härters in der Harzzusammensetzung erlaubt es, das Abbinde- bzw. Aushärteverhalten der Harzzusammensetzung in Abhängigkeit zum auf den plattenförmigen Träger aufgebrachten Papier zu optimieren.

Der Härter kann beispielsweise eine Lösung organischer Salze sein. Bevorzugt weist der Härter dabei einen sauren pH-Wert, vorzugsweise zwischen ≥ pH5 und < pH 7 auf.

Als Härter kann insbesondere ein sogenannter latenter Härter eingesetzt werden. Latente Härter zeichnen sich dadurch aus, dass nach ihrem Zusatz zum Harz einerseits eine ausreichende Verarbeitungszeit bei Zimmertemperatur, andererseits eine möglichst kurze Härtungszeit bei den anschließenden Verarbeitungstemperaturen erzielt wird. Die Wirkung der latenten Härter beruht darauf, dass sie bei gewöhnlicher Temperatur unwirksam sind und erst bei erhöhter Wärme oder aufgrund einer chemischen Reaktion eine Säure freisetzen, die den Härtungsvorgang beschleunigt. Beispiele für latente Härter sind unter anderem Alkyl- oder Alkanolaminsalze der schwefeligen Säure, Amidosulfonsäure, 3-Chlor-1,2-propandiol, p-Toluolsulfonsäure, Morpholin, Ammoniumsulfat, Ammoniumchlorid, Ammoniumsulfit, Ammoniumnitrat, Ethanolaminhydrochlorid, Dimethylethanolammoniumsulfit, oder Diethanolammoniumsulfamat. Insbesondere kann es sich bei dem Härter um eine wässrige, bevorzugt nichtionogene Lösung handeln. Ein Beispiel für einen geeigneten Härter ist MH-180 B (Melatec AG, Schweiz). Die Harzzusammensetzung kann nach dem Kalandrieren beispielsweise mit einer Auftragsmenge zwischen ≥5 g/m² und ≤40 g/m², vorzugsweise ≥10 g/m² und ≤30 g/m² aufgetragen werden.

Das erfindungsgemäße Verfahren unter Verwendung der erfindungsgemäßen Pressplattenanordnung wird zur Herstellung von Dekorpaneelen verwendet.

Unter dem Begriff Dekorpaneel sind im Sinne der Erfindung Wand-, Decken, oder Bodenpannele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe sind Holzart wie z.B. Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wie Steinoberflächen oder Keramikoberflächen nachempfunden.

Dabei kann das erfindungsgemäße Verfahren zur Herstellung eines Dekorpaneels verwendet werden, wobei das Pressgut nach dem Verpressen parallel und/oder orthogonal zur Längsachse in eine vorbestimmte Länge und/oder Breit geschnitten wird.

Das Laminat wird somit als großformatige Platte hergestellt, welche erst im Anschluss auf eine gewünschte Endgröße zugeschnitten wird. Dabei kann es insbesondere vorgesehen sein, dass die Trägerplatte vor dem Aufbringen der Dekorschicht auf der mit der Dekorschicht zu versehenden Seite im Bereich der vorzusehenden Schnitte profiliert wird, wobei die Profilierung eine Schnittzugabe für die vorzusehenden Schnitte aufweist. Dies ermöglicht, dass beim Aufbringen des Dekors auch im Vorfeld die profilierten Bereiche der Trägerplatte berücksichtigt werden und die vollständige sichtbare Oberfläche des späteren Dekorpaneels mit einem Dekor versehen ist.

Bei einer Profilierung im Sinne der Erfindung kann es vorgesehen sein, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Ein dekoratives Profil im Sinne der Erfindung ist beispielsweise eine im Kantenbereich des Dekorpaneels eingebrachte Fase, um beispielsweise zwischen zwei miteinander verbundenen Paneelen nach deren Verbindung eine Fuge zu simulieren, wie sie beispielsweise bei sogenannten Landhausdielen auftritt.

Bei einer teilweisen Profilierung des Dekorpaneels werden nicht bereits alle in dem letztendlichen Paneel vorzusehenden Profile eingebracht, sondern nur ein Teil der vorzusehenden Profile, während weitere Profile in einem anschließenden Schritt eingebracht werden. So kann es beispielsweise vorgesehen sein, dass das in einem Paneel vorzusehende dekorative Profil, wie beispielsweise eine Fase, in einem Arbeitsschritt eingebracht wird, während das funktionale Profil, beispielsweise Nut/Feder in einem nachgelagerten Arbeitsschritt eingebracht wird.

Insbesondere kann es bei der erfindungsgemäßen Verwendung des Verfahrens vorgesehen sein, dass die Dekorpaneele nach dem Zuschnitt an zumindest einer Kante mit einem Profil versehen werden, mittels welchem einzelne Profile miteinander lösbar verbindbar sind. Dabei kann es besonders bevorzugt vorgesehen sein, dass Profile der Art eingebracht werden, dass die einzelnen Paneele im Wesentlichen werkzeuglos miteinander verbunden werden können, insbesondere mittels sogenannter Fold-Down Technik.
Fig. 1 zeigt eine Ausgestaltung einer erfindungsgemäßen Pressplattenanordnung;
Fig. 2 zeigt in einer Detailansicht eine Ausgestaltung von an den Stirnseiten der Pressplatten vorsehbaren formschlüssig ineinandergreifenden Formelementen.

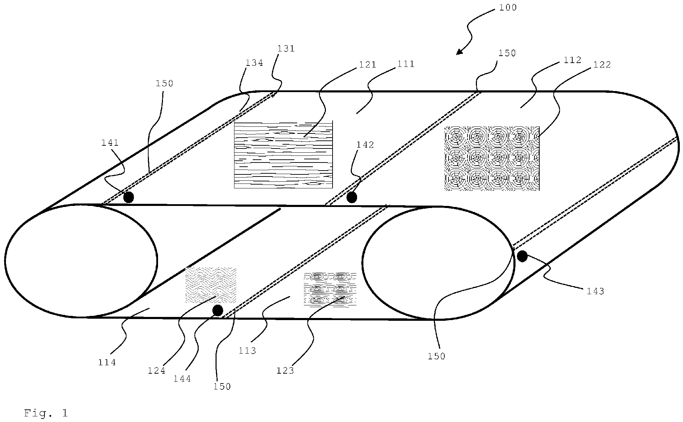

Fig. 1 zeigt eine Ausgestaltung einer erfindungsgemäßen Pressplattenanordnung 100. Die Pressplattenanordnung 100 weist eine Mehrzahl von Pressplatten P₁ bis Pn 111, 112, 113, 114 auf. Die Pressplatten 111, 112, 113, 114 weisen ihrerseits eine Strukturierung zur Einbringung von Oberflächenstrukturen in ein Pressgut auf, die Pressplatte P₁ bis Pₙ 111, 112, 113, 114 voneinander verschiedene Strukturierungen S₁ bis Sₙ 121, 122, 123, 124 aufweisen und über ihre Stirnseiten 130 miteinander verbunden sind. Dabei sind die erste Pressplatte P₁ 111 und die letzte Pressplatte Pₙ 114 über ihre Stirnseiten 131, 134 derart miteinander verbunden, dass die Pressplattenanordnung 100 insgesamt eine geschlossene Bandstruktur ausbildet. Die Pressplatten 111, 112, 113, 114 weisen optische Positionsmarkierungen 141, 142, 143, 144 auf, mittels welcher die Position einer Pressplatte 111, 112, 113, 114 relativ zu einem Pressgut ermittelbar ist. An den Verbindungsstellen zwischen den Stirnseiten der Pressplatten 111, 112, 113, 114 bilden sich Verbindungsbereiche 150 aus. Bei der Nutzung der Pressplattenanordnung in einem Herstellungsverfahren wird das Pressgut unter Berücksichtigung der Positionsmarkierungen 141, 142, 143, 144 derart zu den Pressplatten 111, 112, 113, 114 ausgerichtet, dass der Verbindungsbereich 150 zwischen zwei Pressplatten in einer Lücken zwischen dem Pressgut zu liegen kommt.

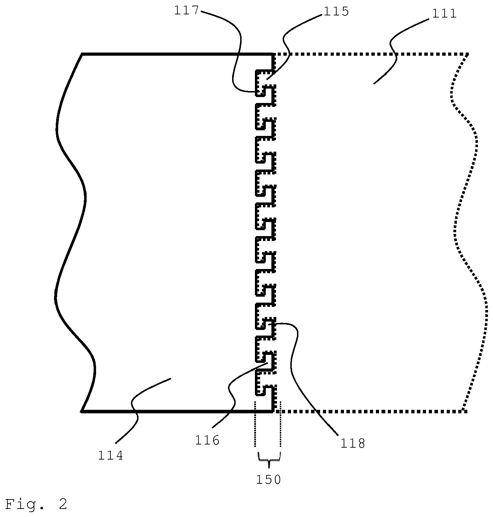

Fig. 2 eine Detailansicht von an der Stirnseite 131, 134 zweier miteinander zu verbindenden Pressplatte 111, 114 vorsehbaren formschlüssig ineinandergreifenden Formelementen 115, 116. Die Formelemente 115, 116 weisen dabei Hinterschneidungen 117, 118 auf, mittels welcher diese ineinander verhakt werden können. Hierbei wird ein Verbindungsbereich 150 ausgebildet.

## Patentansprüche

1. Pressplattenanordnung (100) zum Herstellen eines Dekorpaneels, aufweisend eine Mehrzahl von Pressplatten P₁ bis Pn (111, 112, 113, 114) mit n ≥4, vorzugsweise n ≥5, besonderes bevorzugt n ≥6, wobei die Pressplatten (111, 112, 113, 114) eine Strukturierung zur Einbringung von Oberflächenstrukturen in ein Pressgut aufweisen, **dadurch gekennzeichnet, dass** die Pressplatten P₁ bis Pₙ (111, 112, 113, 114) über ihre Stirnseiten (130) miteinander verbunden sind, wobei die erste Pressplatte P₁ (111) und die letzte Pressplatte Pₙ (114) über ihre Stirnseiten (131, 134) derart miteinander verbunden sind, dass die Pressplattenanordnung (100) insgesamt eine geschlossene Bandstruktur ausbildet.

2. Pressplattenanordnung gemäß Anspruch 1, wobei die Pressplatten P₁ bis Pₙ (111, 112, 113, 114) voneinander verschiedene Strukturierungen S₁ bis Sₙ (121, 122, 123, 124) aufweisen.

3. Pressplattenanordnung gemäß Anspruch 1 oder 2, wobei die Pressplatten (111, 112, 113, 114) an ihren Stirnseiten (130) stoffschlüssig miteinander verbunden sind.

4. Pressplattenanordnung gemäß Anspruch 1 oder 2, wobei die Pressplatten (111, 112, 113, 114) an ihren Stirnseiten (130) lösbar miteinander verbunden sind.

5. Pressplattenanordnung gemäß einem der vorhergehenden Ansprüche, wobei die Pressplatten (111, 112, 113, 114) an ihren Stirnseiten zueinander versetzte, formschlüssig ineinandergreifende Formelemente (115, 116) aufweisen.

6. Pressplattenanordnung gemäß Anspruch 5, wobei die formschlüssig ineinandergreifenden Formelemente (115, 116) Hinterschneidungen (117, 118) aufweisen.

7. Pressplattenanordnung gemäß Anspruch 5, wobei die formschlüssig ineinandergreifenden Formelemente (115, 116) als Hakenelemente ausgeführt sind.

8. Pressplattenanordnung gemäß einem der vorhergehenden Ansprüche, wobei die Pressplatten (111, 112, 113, 114) Positionsmarkierungen (141, 142, 143, 144) aufweisen, mittels welcher die Position einer Pressplatte (111, 112, 113, 114) relativ zu einem Pressgut ermittelbar ist.

9. Pressplattenanordnung gemäß Anspruch 8, wobei die Positionsmarkierungen (141, 142, 143, 144) optische, magnetische und/oder elektronische Markierungsmittel sind.

10. Verfahren zum Herstellen eines Dekorpaneels mit einer im Wesentlichen mit dem Dekor übereinstimmenden Oberflächenstruktur, aufweisend die Verfahrensschritte:
- Bereitstellen einer ersten Trägerplatte T₁ und Aufbringen einer ein erstes Dekors D₁ aufweisenden Dekorschicht auf die erste Trägerplatte T₁;
- Bereitstellen weiterer Trägerplatten Tₙ und Aufbringen weiterer Dekore Dₙ aufweisender Dekorschichten, welche von den Dekoren D₁ und Dₙ₋₁ verschieden sind;
- Unmittelbar aufeinanderfolgendes Zuführen der mit den Dekoren D₁ bis Dₙ versehenden Trägerplatten T₁ bis Tₙ als Pressgut Gₙ zu einer Presse mit einer Pressplattenanordnung gemäß einem der Ansprüche 1 bis 7, wobei die Trägerplatten derart zugeführt werden, dass jeder Trägerplatte Tₙ ein zugehöriges Pressplatte Pₙ zugeordnet wird;
- Auslesen der Positionsmarkierung der jeweiligen Pressplatte Pₙ und Ausrichten des Pressgutes Gₙ derart, dass das Dekor Dₙ synchron zur Strukturierung Sₙ der Pressplatte Pₙ ausgerichtet ist; und
- Verpressen des Pressgutes Gₙ mittels der Pressplatte Pₙ unter Einbringung einer mit dem Dekor Dₙ synchronisierten Struktur Sₙ in das Pressgut

11. Verfahren gemäß Anspruch 10, wobei vor der Zuführung des Pressgutes Gₙ eine Deck- und/oder Verschleißschutzschicht auf die Dekorschicht aufgebracht wird.

12. Verfahren gemäß einem der Ansprüche 10 oder 11, wobei die Dekorschicht mittels eines Direktdruckverfahrens, vorzugsweise Digitaldruckverfahren aufgebracht wird.

13. Verfahren gemäß einem der Ansprüche 10 bis 12, wobei das Pressgut nach dem Verpressen parallel und/oder orthogonal zur Längsachse in eine vorbestimmte Länge und/oder Breit geschnitten wird.

14. Verfahren gemäß Anspruch 13, wobei die Trägerplatte vor dem Aufbringen der Dekorschicht auf der mit der Dekorschicht zu versehenden Seite im Bereich der vorzusehenden Schnitte profiliert wird, wobei die Profilierung eine Schnittzugabe für die vorzusehenden Schnitte aufweist.

15. Verfahren gemäß einem der Ansprüche 13 oder 14, wobei die Dekorpaneele nach dem Zuschnitt an zumindest einer Kante mit einem Profil versehen werden, mittels welchem einzelne Profile miteinander lösbar verbindbar sind.

## Claims

1. Press plate assembly (100) for producing a decorative panel, comprising a plurality of press plates P₁ to Pₙ (111, 112, 113, 114) with n ≥ 4, preferably n ≥ 5, particularly preferably n ≥ 6, wherein the press plates (111, 112, 113, 114) have a patterning for introducing surface structures into a pressed product,
**characterized in that**
the press plates P₁ to Pₙ (111, 112, 113, 114) are connected to each other via their end faces (130), wherein the first press plate P₁ (111) and the last press plate Pₙ (114) are connected to each other via their end faces (131, 134) in such a manner that the press plate assembly (100) as a whole forms a closed belt structure.

2. Press plate assembly according to claim 1, wherein the press plates P₁ to Pₙ (111, 112, 113, 114) have mutually different patternings S₁ to Sₙ (121, 122, 123, 124).

3. Press plate assembly according to claim 1 or 2, wherein the press plates (111, 112, 113, 114) are firmly bonded to one another at their end faces (130).

4. Press plate assembly according to claim 1 or 2, wherein the press plates (111, 112, 113, 114) are releasably connected to one another at their end faces (130).

5. Press plate assembly according to any one of the preceding claims, wherein the press plates (111, 112, 113, 114) comprise positively interlocking form elements (115, 116) offset to each other at their end faces.

6. Press plate assembly according to claim 5, wherein the positively interlocking form elements (115, 116) have undercuts (117, 118).

7. Press plate assembly according to claim 5, wherein the positively interlocking form elements (115, 116) are configured as hook elements.

8. Press plate assembly according to any one of the preceding claims, wherein the press plates (111, 112, 113, 114) comprise position marks (141, 142, 143, 144) by means of which the position of a press plate (111, 112, 113, 114) with respect to a pressed product can be determined.

9. Press plate assembly according to claim 8, wherein the position marks (141, 142, 143, 144) are optical, magnetic and/or electronic marking means.

10. Method for producing a decorative panel comprising a surface structure substantially matching with the decoration, comprising the steps of:
providing a first carrier plate T₁ and applying a decorative layer comprising a first decoration D₁ onto the first carrier plate T₁;
providing further carrier plates Tₙ and applying further decorative layers comprising further decorations Dₙ which are different from the decorations D₁ and Dₙ₋₁;
immediately successively supplying the carrier plates T₁ to Tₙ provided with the decorations D₁ to Dₙ as a pressed product Gₙ to a press comprising a press plate assembly according to any one of claims 1 to 7, wherein the carrier plates are supplied in such a manner that to each carrier plate Tₙ a corresponding press plate Pₙ is associated;
reading the position marks of the respective press plate Pₙ and aligning the pressed product Gₙ such that the decoration Dₙ is aligned in conformity with the patterning Sₙ of the press plate Pₙ; and
- compressing the pressed product Gₙ by means of the press plate Pₙ while introducing the patterning Sₙ in conformity with the decoration Dₙ in the pressed product

11. Method according to claim 10, wherein prior to the supply of the pressed product Gₙ a cover and/or a wear protection layer is applied onto the decorative layer.

12. Method according to any one of claims 10 or 11, wherein the decorative layer is applied by means of a direct printing process, preferably by means of a digital printing process.

13. Method according to any one of claims 10 to 12, wherein the pressed product is cut after the compressing process parallel and/or orthogonal to the longitudinal axis in a predetermined length and/or width.

14. Method according to claim 13, wherein the carrier plate prior to the application of the decorative layer is profiled on the side to be provided with the decorative layer in the region of the cuts to be provided, wherein the profiling includes a cutting allowance for the cuts to be provided.

15. Method according to claim 13 or 14, wherein the decorative panels after the cutting process are provided with a profile at least at one edge by means of which individual profiles can be detachably connected to each other.

## Revendications

1. Ensemble de plaques de pression (100) destiné à la fabrication d'un panneau de décoration, présentant une multiplicité de plaques de pression P₁ à Pₙ (111, 112, 113, 144) avec n ≥ 4, de préférence n ≥ 5, de manière particulièrement préférée n ≥ 6, dans lequel les plaques de pression (111, 112, 113, 114) présentent une structuration pour la mise en place de structures de surface dans un produit à presser, **caractérisé en ce que** les plaques de pression P₁ à Pₙ (111, 112, 113, 114) sont reliées ensemble par le biais de leurs faces frontales (130), dans lequel la première plaque de pression P₁ (111) et la dernière plaque de pression Pₙ (114) sont reliées ensemble par leurs faces frontales (131, 134) de telle manière que l'ensemble de plaques de pression (100) dans sa totalité forme une structure en bande fermée.

2. Ensemble de plaques de pression selon la revendication 1, dans lequel les plaques de pression P₁ à Pₙ (111, 112, 113, 114) présentent des structurations S₁ à Sₙ (121, 122, 123, 124) différentes les unes des autres.

3. Ensemble de plaques de pression selon la revendication 1 ou 2, dans lequel les plaques de pression (111, 112, 113, 114) sont reliées ensemble par complémentarité des matières au niveau de leurs faces frontales (130).

4. Ensemble de plaques de pression selon la revendication 1 ou 2, dans lequel les plaques de pression (111, 112, 113, 114) sont reliées ensemble de manière amovible au niveau de leurs faces frontales (130).

5. Ensemble de plaques de pression selon l'une des revendications précédentes, dans lequel les plaques de pression (111, 112, 113, 114) présentent au niveau de leurs faces frontales des éléments moulés (115, 116) décalés les uns par rapport aux autres, s'interpénétrant par complémentarité des formes.

6. Ensemble de plaques de pression selon la revendication 5, dans lequel les éléments moulés (115, 116) s'interpénétrant par complémentarité des formes présentent des contre dépouilles (117, 118).

7. Ensemble de plaques de pression selon la revendication 5, dans lequel les éléments moulés (115, 116) s'interpénétrant par complémentarité des formes sont conçus sous la forme d'éléments en crochets.

8. Ensemble de plaques de pression selon l'une des revendications précédentes, dans lequel les plaques de pression (111, 112, 113, 114) présentent des marquages de positions (141, 142, 143, 144) au moyen desquels la position d'une plaque de pression (111, 112, 113, 114) peut être déterminée par rapport à un produit à presser.

9. Ensemble de plaques de pression selon la revendication 8, dans lequel les marquages de positions (141, 142, 143, 144) sont des moyens de marquage optiques, magnétiques et/ou électroniques.

10. Procédé destiné à la fabrication d'un panneau de décoration avec une structure de surface qui est en accord dans l'ensemble avec le décor, présentant les étapes de procédé :
- mise en place d'une première plaque de support T₁ et application d'une couche de décor présentant un premier décor D₁ sur la première plaque de support T₁ ;
- mise en place d'autres plaques de support Tₙ et application d'autres couches de décor présentant des décors Dₙ, lesquelles sont différentes entre les décors D₁ et Dₙ₋₁ ;
- transfert immédiat de manière successive des plaques de support T₁ à Tₙ munies des décors D₁ à Dₙ sous forme d'un produit à presser Gₙ vers une presse avec un ensemble de plaques de pression selon l'une des revendications 1 à 7, où les plaques de support sont transférées de telle manière qu'une plaque de pression Pₙ correspondante est associée à chaque plaque de support Tₙ ;
- lecture du marquage de position de la plaque de pression Pₙ en question et orientation du produit à presser Gn de telle manière que le décor Dₙ est orienté de manière synchronisée par rapport à la structuration Sₙ de la plaque de pression ; et
- compression du produit à presser Gₙ au moyen de la plaque de pression Pₙ moyennant l'application de la structure synchronisée du décor Dₙ dans le produit à presser

11. Procédé selon la revendication 10, dans lequel une couche de recouvrement et/ou de protection contre l'usure est rapportée sur la couche de décoration avant le transfert du produit à presser

12. Procédé selon l'une des revendications 10 ou 11, dans lequel la couche de décoration est appliquée au moyen d'un procédé d'impression directe, de préférence, un procédé d'impression numérique.

13. Procédé selon l'une des revendications 10 à 12, dans lequel le produit à presser est découpé parallèlement et/ou de manière orthogonale par rapport à l'axe longitudinal dans une longueur et/ou une largeur prédéterminée.

14. Procédé selon la revendication 13, dans lequel la plaque de support est profilée avant l'application de la couche de décoration sur le côté muni de la couche de décoration dans la région des découpes à prévoir, où l'établissement du profilé présente un ajout de découpe pour les découpes à prévoir.

15. Procédé selon l'une des revendications 13 ou 14, dans lequel les panneaux de décoration sont munis d'au moins un bord avec un profilé après la découpe, au moyen duquel les profilés individuels peuvent être liés ensemble de manière amovible.
